# EUROPÄISCHE PATENTANMELDUNG

(11) **EP 4 389 976 A1**
(43) Veröffentlichungstag der Anmeldung: **26.06.2024**
(21) Anmeldenummer: 23214724.9
(22) Anmeldetag: 06.12.2023
(51) Int. Cl.: E01C 19/00, E01C 19/48, E01C 23/08

(54) **SELBSTFAHRENDE BAUMASCHINE UND VERFAHREN ZUR BEARBEITUNG DES BODENS ODER ERRICHTUNG EINES BAUWERKS AUF DEM BODEN MIT EINER SOLCHEN BAUMASCHINE**

(30) Priorität: 19.12.2022 DE 102022133913
(71) Anmelder: Wirtgen GmbH, 53578 Windhagen (DE)
(72) Erfinder: Buschmann, Martin, 67435 Neustadt (DE); Delius, Henning, 67480 Edenkoben (DE)
(74) Vertreter: Oppermann, Frank

(57) **Zusammenfassung**

Die Erfindung betrifft eine selbstfahrende Baumaschine, insbesondere Straßenfräsmaschine, zur Bearbeitung des Bodens oder Errichtung eines Bauwerks auf dem Boden in einem vorausgehenden Arbeitsprozess, dem ein anderer Arbeitsprozess mit einer anderen Baumaschine folgt. Darüber hinaus betrifft die Erfindung ein System umfassend eine selbstfahrende Baumaschine und einen Cloud-Speicher 18 eines Internetdienstanbieters sowie ein Verfahren zur Bearbeitung des Bodens. Die erfindungsgemäße Baumaschine 1 umfasst eine Mobilfunk-Kommunikationseinrichtung 12, einen GNSS-Empfänger 9, eine GNSS-Bewertungseinrichtung 13 bzw. Mobilfunk-Bewertungseinrichtung 15 sowie eine GNSS- Bewertungsgrößen-Erfassungseinrichtung 14 bzw. Mobilfunk-Bewertungsgrößen-Erfassungseinrichtung 16. Die GNSS-Bewertungseinrichtung 13 bzw. Mobilfunk-Bewertungseinrichtung 15 ist derart eingerichtet, dass während des Vorschubs der Baumaschine an einer Mehrzahl von Orten im Gelände jeweils mindestens eine die Qualität der GNSS-Signale bzw. des Mobilfunksignals an dem jeweiligen Ort bewertende Bewertungsgröße B ermittelt wird, und die GNSS-Bewertungsgrößen-Erfassungseinrichtung 14 bzw. die Mobilfunk-Bewertungsgrößen-Erfassungseinrichtung 16 ist derart eingerichtet, dass mit den von dem GNSS-Empfänger 9 an den jeweiligen Orten im Gelände ermittelten Positionsdaten ein die Qualität der Signale an den jeweiligen Orten beschreibender raumbezogener (georeferenzierter) Telemetrie-Datensatz erzeugt wird.

## Beschreibung

Die Erfindung betrifft eine selbstfahrende Baumaschine zur Bearbeitung des Bodens oder Errichtung eines Bauwerks auf dem Boden in einem vorausgehenden Arbeitsprozess, dem ein anderer Arbeitsprozess mit einer anderen Baumaschine folgt. Darüber hinaus betrifft die Erfindung ein System umfassend eine selbstfahrende Baumaschine zur Bearbeitung des Bodens oder Errichtung eines Bauwerks auf dem Boden in einem vorausgehenden Arbeitsprozess, dem ein anderer Arbeitsprozess mit einer anderen Baumaschine folgt, und einen Cloud-Speicher sowie ein Verfahren zur Bearbeitung des Bodens oder Errichtung eines Bauwerks auf dem Boden mit einer selbstfahrenden Baumaschine in einem vorausgehenden Arbeitsprozess, dem ein anderer Arbeitsprozess mit einer anderen Baumaschine folgt.

Selbstfahrende Baumaschinen zeichnen sich dadurch aus, dass sie über eine an einem Maschinenrahmen angeordnete Arbeitseinrichtung zur Bearbeitung des Bodens, beispielsweise zum Fräsen des Bodens, oder Errichtung eines Bauwerks, beispielsweise einer Fahrbahn, auf einem Boden verfügen. Nachfolgend wird unter Boden der Untergrund verstanden, der auch eine zu bearbeitende (schadhafte) Straße sein kann. Die selbstfahrende Baumaschine kann eine Straßenfräsmaschine, ein Recycler, ein Bodenstabilisierer, eine Planierraupe, eine Walze, ein Grader, ein Straßenfertiger, ein Gleitschalungsfertiger oder ein Beschicker sein. Bei den Straßenfräsmaschinen beispielsweise umfasst die Arbeitseinrichtung eine mit Fräswerkzeugen bestückte Fräswalze, mit der Material in einer vorgegebenen Arbeitsbreite abgetragen werden kann. Bei den Straßenfertigern beispielsweise umfasst die Arbeitseinrichtung eine Einbaubohle, mit der Material für eine Fahrbahn eingebaut werden kann.

Bei selbstfahrenden Baumaschinen wird eine weitgehend automatische Steuerung der Baumaschine ohne nennenswerte Eingriffe des Fahrzeugführers angestrebt.

Ein bekanntes Verfahren zum Steuern von selbstfahrenden Baumaschinen setzt den Einsatz eines Leitdrahtes voraus, mit dem eine Trajektorie vorgegeben wird. Selbstfahrende Baumaschinen können aber auch unter dem Einsatz einer Totalstation zur Positionsbestimmung und/oder eines globalen Navigationssatellitensystems (GNSS) gesteuert werden, welches eine Mehrzahl von Satelliten umfasst.

Die Steuerung von Baumaschinen mit einem globalen Navigationssatellitensystem (GNSS) hat sich in der Praxis bewährt. Allerdings setzt diese Steuerung der Baumaschinen den Empfang der Signale des GNSS voraus. In der Praxis kann der Empfang der Satellitensignale aber durch Abschattungen beispielsweise durch Bäume oder Gebäudeabdeckungen gestört sein, was zur Folge hat, dass mit dem GNSS die Position der Baumaschine an einem Ort im Gelände nicht oder nicht mit ausreichender Genauigkeit bestimmt werden kann.

Für eine genaue Positionsbestimmung ist aber nicht nur die Signalstärke der Satellitensignale von entscheidender Bedeutung, sondern auch weitere Faktoren. Die Positionsbestimmung unter dem Einsatz eines GNSS beruht auf der Bestimmung der Entfernungen zu den Satelliten durch Signallaufzeitmessung. Die Genauigkeit der Positionsbestimmung ist somit von der Position der zur Verfügung stehenden Satelliten zueinander (Satellitenkonstellation) sowie von der Genauigkeit der Zeitmessung (Laufzeit) abhängig. Sämtliche die Genauigkeit der Positionsbestimmung bestimmenden Faktoren haben daher einen Einfluss auf die Qualität der GNSS-Signale. Nachfolgend wird unter der Qualität der GNSS-Signale ein Qualitätskriterium für die Genauigkeit der Positionsbestimmung verstanden. Eine exakte Positionsbestimmung setzt daher eine hohe Qualität der GNSS-Signale voraus. Unter GNSS-Signalen werden auch sämtliche Korrektursignale verstanden, die eine Verbesserung der Genauigkeit der Positionsbestimmung erlauben.

Aus der DE 197 56 676 C1 ist eine Straßenfräsmaschine bekannt, welche über ein Positionsbestimmungssystem verfügt. Die Baumaschine weist eine Rover-Einheit zum Empfangen von Satellitensignalen eines globalen Navigationssatellitensystems (GNSS) und von Korrektursignalen einer Referenzstation auf, wobei die Rover-Einheit derart konfiguriert ist, dass auf der Grundlage der Satellitensignale und der Korrektursignale die Position eines Referenzpunktes auf der Baumaschine beschreibende Positionsdaten in einem von der Baumaschine unabhängigen Koordinatensystem bestimmt werden.

Zur Übertragung von digitalen Signalen (Daten) zwischen digitalen Endgeräten über weite Übertragungswege verfügen bekannte Baumaschinen im Allgemeinen über eine Mobilfunk-Kommunikationseinrichtung. In der Praxis hat sich gezeigt, dass der Empfang der Mobilfunk-Signale auf der Baustelle ebenfalls gestört sein kann. Insofern ist für eine automatisierte Steuerung der Baumaschine auch die Qualität des Mobilfunk-Signals von entscheidender Bedeutung. Die Mobilfunk-Kommunikationseinrichtung erlaubt auch einen Empfang von Korrektursignalen eines DGNSS (Differential GNSS), wenn die Korrektursignale über ein GSM (Global System for Mobile Communications) ausgesandt werden.

Auf Baustellen kommen verschiedene Baumaschinen zum Einsatz, die ein System von Baumaschinen bilden und deren Betrieb in der Gesamtheit zu betrachten ist. Die bekannten Straßenfräsmaschinen können beispielsweise zur Abtragung schadhafter Straßenschichten in einem vorausgehenden Arbeitsprozess betrieben werden. In einem nachfolgenden Arbeitsprozess, der nicht am gleichen Tag erfolgen muss, kann dann mit einem Straßenfertiger eine gebundene Schicht, beispielsweise Asphalt, eingebaut werden.

Eine automatische Steuerung der in dem nachfolgenden Arbeitsprozess eingesetzten Baumaschine unter dem Einsatz eines GNSS sowie der Verwendung eines Mobilfunknetzes setzt eine hohe Qualität der GNSS-Signale bzw. des Mobilfunksignals voraus.

Wenn die Qualität der GNSS-Signale bzw. Mobilfunksignale nicht ausreichend sein sollte, ist es erforderlich für den nachfolgenden Arbeitsprozess entsprechende technische Vorkehrungen zu treffen. Auf der Baustelle können beispielsweise die bekannten Repeater zur Verstärkung der Mobilfunksignale eines GSM aufgestellt werden. Da für GNSS-Signale aber keine Repeater zur Verfügung stehen, muss auf ein alternatives System gewechselt werden. In diesem Fall kann ein terrestrisches Positionsbestimmungssystem verwendet werden, beispielsweise eine Totalstation.

Der Erfindung liegt die Aufgabe zugrunde, technische Mittel bereitzustellen, mit denen die Planung des Bauvorhabens vereinfacht werden kann, die Einsatzeffizienz der in der Gesamtheit arbeitenden Baumaschinen verbessert werden kann, Stillstandzeiten vermieden und Kosten eingespart werden können. Insbesondere liegt der Erfindung die Aufgabe zugrunde, eine Baumaschine bereitzustellen, insbesondere Straßenfräsmaschine, Recycler, Bodenstabilisierer, Planierraupe, Walze, Grader, Straßenfertiger, Gleitschalungsfertiger oder Beschicker, welche für einen nachfolgenden Arbeitsprozess mit einer anderen Baumaschine eine Ermittlung der Qualität der GNSS-Signale bzw. Mobilfunksignale auf der Baustelle erlaubt.

Die Lösung dieser Aufgaben erfolgt erfindungsgemäß mit den Merkmalen der unabhängigen Patentansprüche. Die abhängigen Ansprüche betreffen besondere Ausführungsformen der Erfindung.

Die nachfolgend beschriebenen Ausführungsformen der Erfindung können eines oder mehrere der nachfolgend genannten Merkmale oder Merkmalskombinationen umfassen. Ein mit einem unbestimmten Artikel bezeichnetes Merkmal kann auch mehrfach vorhanden sein, wenn der unbestimmte Artikel nicht mit einem ausdrücklichen Hinweis auf eine nur einmalige Verwendung zu verstehen ist. Eine Bezeichnung von Merkmalen mit einem Zahlwort, beispielsweise "erstes und zweites", schließt nicht aus, dass über die durch das Zahlwort angegebene Anzahl hinaus diese Merkmale noch weitere Male vorhanden sein können. Bei der Beschreibung sämtlicher Ausführungsformen ist der Ausdruck "kann" auch als "vorzugsweise" oder "zweckmäßigerweise" zu verstehen.

Die erfindungsgemäße selbstfahrende Baumaschine, insbesondere Straßenfräsmaschine, Recycler, Bodenstabilisierer, Planierraupe, Walze, Grader, Straßenfertiger, Gleitschalungsfertiger oder Beschicker, verfügt über einen von Laufwerken getragenen Maschinenrahmen, an dem eine Arbeitseinrichtung vorgesehen ist, welche beispielsweise eine Fräswalze oder Fräs-/Mischrotor sein kann, und mindestens eine Antriebseinrichtung zum Antreiben der Laufwerke, so dass die Baumaschine im Gelände translatorische und/oder rotatorische Bewegungen ausführen und den Boden bearbeiten oder ein Bauwerk, beispielsweise eine Fahrbahn, auf dem Boden, errichten kann. Wenn die Arbeitseinrichtung einen Antrieb erfordert, beispielsweise eine Fräswalze ist, kann die Antriebseinrichtung auch die Arbeitseinrichtung antreiben. Darüber hinaus umfasst die Baumaschine eine Mobilfunk-Kommunikationseinrichtung, die eine Mobilfunkantenne zum Senden und Empfangen eines Mobilfunksignals und eine Recheneinheit zur Verarbeitung eines Mobilfunksignals aufweist. Unter einer Mobilfunk-Kommunikationseinrichtung werden sämtliche Einrichtungen verstanden, mit denen sich eine Mobilfunkverbindung aufbauen lässt, um Signale (Daten) zu übertragen. Des Weiteren verfügt die Baumaschine über einen GNSS-Empfänger, der eine an einem Referenzpunkt der Baumaschine angeordnete Antenne zum Empfangen von GNSS-Signalen einer Mehrzahl von Satelliten eines globalen Navigationssatellitensystem und eine Recheneinheit zur Verarbeitung von GNSS-Signalen und Ausgabe von die Position des Referenzpunktes beschreibenden Positionsdaten umfasst. In diesem Zusammenhang werden unter GNSS-Signalen auch Korrektursignale (Korrekturdaten) verstanden, mit denen Fehler bei der Positionsbestimmung in Echtzeit korrigiert werden können. Die Positionsbestimmung kann in einem zwei- oder dreidimensionalen Koordinatensystem erfolgen, welches ein von der Baumaschine unabhängiges Koordinatensystem sein kann.

Eine Ausführungsform der erfindungsgemäßen Baumaschine sieht eine GNSS-Bewertungseinrichtung vor, die derart eingerichtet ist, dass während des Vorschubs der Baumaschine an einer Mehrzahl von Orten im Gelände jeweils mindestens eine die Qualität der GNSS-Signale an dem jeweiligen Ort bewertende GNSS-Bewertungsgröße ermittelt wird, d. h. eine Größe, beispielsweise die Signalstärke, die für die Qualität der GNSS-Signale charakteristisch ist. Die GNSS-Bewertungsgröße kann auch eine die Qualität von Korrektursignalen bzw. Korrekturdaten beschreibende Größe sein.

Darüber hinaus zeichnet sich die erfindungsgemäße Baumaschine durch eine GNSS-Bewertungsgrößen-Erfassungseinrichtung aus, die derart eingerichtet ist, dass mit den von dem GNSS-Empfänger an den jeweiligen Orten im Gelände ermittelten Positionsdaten ein die Qualität der GNSS-Signale an den jeweiligen Orten beschreibender raumbezogener (georeferenzierter) GNSS-Telemetrie-Datensatz erzeugt wird. Die GNSS-Bewertungsgrößen-Erfassungseinrichtung kann den GNSS-Telemetrie-Datensatz dadurch erzeugen, dass die von dem GNSS-Empfänger empfangenen GNSS-Signale und die sich daraus ergebenen GNSS-Bewertungsgrößen erfasst werden und den GNSS-Bewertungsgrößen auf der Grundlage der GNSS-Signale raumbezogene Informationen (Georeferenz) zugewiesen werden. Der GNSS-Telemetrie-Datensatz kann auch Daten enthalten, die den Zeitpunkt (Datum und Uhrzeit) beschreiben, zu dem die Qualität der GNSS-Signale bewertet wird (Zeitstempel), so dass bei der weiteren Auswertung auch eine mögliche Abhängigkeit der Genauigkeit der Positionsbestimmung von der Zeit Berücksichtigung finden kann. Der GNSS-Telemetrie-Datensatz kann auch Daten enthalten, die beschreiben, ob Korrekturdaten von geostationären Satelliten oder Bodenstationen empfangen werden. Die in dem GNSS-Telemetrie-Datensatz enthaltenen GNSS-Bewertungsgrößen können auch die Qualität der Korrekturdaten beschreiben.

Die GNSS-Bewertungseinrichtung und/oder die GNSS-Bewertungsgrößen-Erfassungseinrichtung können eine Recheneinheit aufweisen, welche Bestandteil einer zentralen Steuer- und Recheneinheit der Baumaschine sein kann. Die Recheneinheit der GNSS-Bewertungseinrichtung und/oder GNSS-Bewertungsgrößen-Erfassungseinrichtung kann auch Bestandteil der Recheneinheit des GNSS-Empfängers oder einer anderen Baugruppe der Baumaschine sein.

Die GNSS-Bewertungsgrößen-Erfassungseinrichtung wirkt derart mit der Mobilfunk-Kommunikationseinrichtung zusammen, dass der raumbezogene GNSS-Telemetrie-Datensatz an einen Cloud-Speicher eines Internetdienstanbieters gesendet werden kann.

Der von der GNSS-Bewertungsgrößen-Erfassungseinrichtung erzeugte GNSS-Telemetrie-Datensatz kann nicht prozessierte Rohdaten umfassen, welche für die weitere Verwendung mit einer geeigneten Datenverarbeitungseinrichtung noch verarbeitet werden müssen. Die Recheneinheit der GNSS-Bewertungsgrößen-Erfassungseinrichtung kann aber auch eingerichtet sein, um die Daten schon auf der Baumaschine zu verarbeiten.

Die Planung des Bauvorhabens kann auf der Grundlage des in dem Cloud-Speicher zur Verfügung gestellten GNSS-Telemetrie-Datensatzes erfolgen, welcher aus dem Cloud-Speicher heruntergeladen und ausgewertet werden kann. Folglich steht der raumbezogene GNSS-Telemetrie-Datensatz für den nachfolgenden Arbeitsprozess beispielsweise in einem Planungsbüro jederzeit zur Verfügung. Da der GNSS-Telemetrie-Datensatz schon vor Beginn des nachfolgenden Arbeitsprozesses zur Verfügung steht, können die für den nachfolgenden Arbeitsprozess erforderlichen Vorkehrungen rechtzeitig getroffen werden. Der GNSS-Telemetrie-Datensatz kann auch an die nachfolgende Baumaschine gesendet werden, d. h. in den Cloud-Speicher hochgeladen und von der nachfolgenden Baumaschine aus dem Cloud-Speicher heruntergeladen werden, um in Abhängigkeit von der Qualität der GNSS Signale Eingriffe in die Maschinensteuerung vorzunehmen. Der entscheidende Vorteil liegt darin, dass die erfindungsgemäße Baumaschine nicht nur zur Bearbeitung des Bodens oder der Errichtung eines Bauwerks auf dem Boden, sondern auch zur Erfassung des GNSS-Telemetrie-Datensatz fungiert.

Die erfindungsgemäße Baumaschine kann Bestandteil eines Systems für die Bodenbearbeitung sein, welches die erfindungsgemäße Baumaschine, einen Cloud-Speicher eines Internetdienstanbieters, der auch der Hersteller der Baumaschine sein kann, und eine Datenverarbeitungseinrichtung mit einer Mobilfunk-Kommunikationseinrichtung zum Aufbau einer Mobilfunkverbindung umfasst. Der GNSS-Telemetrie-Datensatz kann mit der Datenverarbeitungseinrichtung aus dem Cloud-Speicher ausgelesen und die Daten des GNSS-Telemetrie-Datensatzes können mit der Datenverarbeitungseinrichtung verarbeitet werden. Die Daten des GNSS-Telemetrie-Datensatz können auf einem Bildschirm der Datenverarbeitungseinrichtung visualisiert werden. Die Datenverarbeitungseinrichtung kann beispielsweise ein Computer, Laptop oder Mobilfunkgerät sein. Auf diesen Geräten kann eine entsprechende Software (App) geladen sein.

Die GNSS-Bewertungsgrößen-Erfassungseinrichtung kann derart eingerichtet sein, dass zur Erzeugung des raumbezogenen GNSS-Telemetrie-Datensatzes während des Vorschubs der Baumaschine die mindestens eine die Qualität der GNSS-Signale an dem jeweiligen Ort bewertende GNSS-Bewertungsgröße jeweils nach Zurücklegen einer vorgegebenen Wegstrecke oder nach Ablauf eines vorgegebenen Zeitintervalls fortlaufend erfasst wird. Dabei können Wegpunkten, die in Arbeitsrichtung links und rechts der Trajektorie in einem bestimmten Abstand liegen, dieselben Bewertungsgrößen zugeordnet werden. Folglich kann eine Bahn mit einer vorgegebenen Breite, beispielsweise die von der Baumaschine zu bearbeitende Bahn, deren Breite (Spurbreite) bekannt ist, in einzelne Bereiche aufgeteilt werden, denen jeweils eine GNSS-Bewertungsgröße zugewiesen wird. Die Daten können in Form einer Tabelle in einem Speicher abgelegt werden. Die einzelnen Bereiche haben dann eine bestimmte Breite, welche der Spurbreite entsprechen kann, und eine vorgegebene Länge, die sich aus der vorgegebenen Wegstrecke bzw. dem vorgegebenen Zeitintervall ergibt. Anstelle einer Signalerfassung nur an bestimmten Orten können die Signale während des Vorschubs der Baumaschine auch kontinuierlich erfasst werden.

Die GNSS-Bewertungsgrößen-Erfassungseinrichtung kann weiterhin derart eingerichtet sein, dass den Werten der mindestens einen die Qualität der GNSS-Signale an dem jeweiligen Ort bewertenden GNSS-Bewertungsgröße Farben zugeordnet werden (Heatmapping), um die Werte der mindestens einen GNSS-Bewertungsgröße an den jeweiligen Orten in einer graphischen Darstellung der von der Baumaschine zu bearbeitenden Fläche als farbcodierte Bereiche darzustellen (Heatmapping). Die Daten des GNSS-Telemetrie-Datensatzes können in einer Bilddatei in den bekannten Formaten zusammengefasst sein, welche in den Cloud-Speicher hochgeladen wird. Dann ist eine weitere Verarbeitung der Daten nicht mehr erforderlich. Die Erzeugung der Bilddaten zur Visualisierung kann aber auch erst mit der externen Datenverarbeitungseinrichtung erfolgen.

Die Erfassung der Daten durch den Bediener (Planer) kann dadurch erleichtert werden, dass die GNSS-Bewertungsgrößen-Erfassungseinrichtung derart eingerichtet ist, dass zur Erzeugung des raumbezogenen GNSS-Telemetrie-Datensatzes die mindestens eine die Qualität der GNSS-Signale an dem jeweiligen Ort bewertende GNSS-Bewertungsgröße unter Berücksichtigung mindestens eines Bewertungskriteriums ausgewertet wird, wobei die GNSS-Bewertungsgrößen-Erfassungseinrichtung eingerichtet ist, um die Entscheidung zu treffen, ob die mindestens eine GNSS-Bewertungsgröße an dem jeweiligen Ort dem mindestens einem Bewertungskriterium genügt oder die mindestens eine GNSS-Bewertungsgröße dem mindestens einem Bewertungskriterium nicht genügt. Ein geeignetes Kriterium kann beispielsweise das Überschreiten bzw. Unterschreiten eines Grenzwertes sein. Die Bewertung der Bewertungsgrößen kann aber auch mit einer komplexeren Signalanalyse erfolgen.

Die GNSS-Bewertungseinrichtung kann derart eingerichtet sein, dass als eine die Qualität der GNSS-Signale bewertende GNSS-Bewertungsgröße ein mit die Signalstärke der GNSS-Signale der Satelliten eines globalen Navigationssatellitensystems korrelierender Wert und/oder ein mit der Sattelitengeometrie korrelierender Wert ermittelt wird. Für die Bewertung der Signalqualität sind verschiedene Bewertungsgrößen bekannt. Neben der Signalstärke der einzelnen Satelliten kann eine Bewertungsgröße beispielsweise ein DOP(Dilution of Precision)-Wert (H(Horizontal)DOP oder V(Vertical)DOP) oder GDOP(Geometric-Dilution of Precision)-Wert sein, welcher ein Maß für die von der Satellitengeometrie abhängigen Streubreite der Messwerte bei einem GNSS ist.

Ein anderer Aspekt der Erfindung liegt in der Evaluierung der Qualität des Mobilfunksignals mittels der Baumaschine. Dieser Aspekt ist ein von dem Aspekt der Evaluierung des GNSS-Signals grundsätzlich unabhängiger Aspekt. Von Vorteil ist aber, wenn die Baumaschine die Evaluierung beider Signale erlaubt.

Eine Ausführungsform der erfindungsgemäßen Baumaschine umfasst eine Mobilfunk-Bewertungseinrichtung, die derart eingerichtet ist, dass während des Vorschubs der Baumaschine an einer Mehrzahl von Orten im Gelände jeweils mindestens eine die Qualität des Mobilfunksignals an dem jeweiligen Ort bewertende Mobilfunk-Bewertungsgröße ermittelt wird, und eine Mobilfunk-Bewertungsgrößen-Erfassungseinrichtung, die derart eingerichtet ist, dass mit den von dem GNSS-Empfänger an den jeweiligen Orten im Gelände ermittelten Positionsdaten ein die Qualität des Mobilfunksignals an den jeweiligen Orten beschreibender raumbezogener Mobilfunk-Telemetrie-Datensatz erzeugt wird.

Der Mobilfunk-Telemetrie-Datensatz kann auch Daten enthalten, die den Zeitpunkt (Datum oder Uhrzeit) beschreiben, zu dem die Qualität der Mobilfunk-Signale bewertet wird (Zeitstempel), so dass bei der weiteren Auswertung auch eine mögliche Abhängigkeit der Signalqualität von der Zeit Berücksichtigung finden kann.

Die Mobilfunk-Bewertungsgrößen-Erfassungseinrichtung wirkt derart mit der Mobilfunk-Kommunikationseinrichtung zusammen, dass der raumbezogene Mobilfunk-Telemetrie-Datensatz an einen Cloud-Speicher eines Internetdienstanbieters gesendet wird.

Die Mobilfunk-Bewertungsgrößen-Erfassungseinrichtung kann derart eingerichtet sein, dass zur Erzeugung des raumbezogenen Mobilfunk-Telemetrie-Datensatzes während des Vorschubs der Baumaschine die mindestens eine von der Mobilfunk-Bewertungseinrichtung ermittelte Mobilfunk-Bewertungsgröße jeweils nach Zurücklegen einer vorgegebenen Wegstrecke oder nach Ablauf eines vorgegebenen Zeitintervalls erfasst wird.

Die Mobilfunk-Bewertungsgrößen-Erfassungseinrichtung kann weiterhin derart eingerichtet sein, dass den Werten der mindestens einen die Qualität des Mobilfunk-Signals an dem jeweiligen Ort bewertenden Mobilfunk-Bewertungsgröße Farben zugeordnet werden, um die Werte der mindestens einen Mobilfunk-Bewertungsgröße an den jeweiligen Orten in einer graphischen Darstellung der von der Baumaschine zu bearbeitenden Fläche als farbcodierte Bereiche darzustellen.

Darüber hinaus kann die Mobilfunk-Bewertungsgrößen-Erfassungseinrichtung derart eingerichtet sein, dass zur Erzeugung des raumbezogenen Mobilfunk-Telemetrie-Datensatzes die mindestens eine die Qualität des Mobilfunk-Signals an dem jeweiligen Ort bewertende Mobilfunk-Bewertungsgröße unter Berücksichtigung mindestens eines Bewertungskriteriums ausgewertet wird, wobei die Mobilfunk-Bewertungsgrößen-Erfassungseinrichtung eingerichtet ist, um die Entscheidung zu treffen, ob die mindestens eine Mobilfunk-Bewertungsgröße an dem jeweiligen Ort dem mindestens einen Bewertungskriterium genügt oder die mindestens eine Bewertungsgröße dem mindestens einen Bewertungskriterium nicht genügt.

Als eine die Qualität des Mobilfunk-Signals bewertende Mobilfunk-Bewertungsgröße kann ein mit der Signalstärke des Mobilfunk-Signals korrelierender Wert und/oder ein mit der Laufzeit des Mobilfunksignals korrelierender Wert und/oder ein mit der Upload-Rate und/oder Download-Rate des Mobilfunksignals korrelierender Wert ermittelt werden. Ein die Signalstärke beschreibender Wert ist beispielsweise der bekannte RSSI(Received Signal Strength)-Wert. Die Mobilfunk-Bewertungsgröße kann auch den Mobilfunkstandard beschreiben, beispielsweise LTE, 3G, 5G, etc.

Die GNSS-Bewertungsgröße und die Mobilfunk-Bewertungsgröße können auch den Zustand beschreiben, dass GNSS-Signale bzw. Mobilfunk-Signale überhaupt nicht empfangen werden. Wenn die GNSS-Bewertungsgröße bzw. die Mobilfunk-Bewertungsgröße die Signalstärke ist, kann auf diesen Zustand geschlossen werden, wenn die Signalstärke gleich 0 ist. Folglich beschreibt der jeweilige Telemetrie-Datensatz auch diesen Zustand.

Im Fall eines auf der gesamten Baustelle gestörten Mobilfunkempfangs kann der GNSS- bzw. Mobilfunk-Telemetrie-Datensatz nicht in einen Cloud-Speicher hochgeladen werden. Wenn ein Telemetrie-Datensatz in der Cloud nicht zur Verfügung steht, kann aber zumindest auf diesen Totalausfall geschlossen werden. Ansonsten kann der jeweilige Telemetrie-Datensatz zu einem Zeitpunkt in den Cloud-Speicher hochgeladen werden, wenn der Mobilfunkempfang nicht gestört ist.

Im Fall eines gestörten Empfangs der GNSS-Signale während des Vorschubs der Baumaschine kann ein GNSS-Telemetrie-Datensatz bzw. Mobilfunk-Telemetrie-Datensatz nicht erzeugt werden, welcher raumbezogene Daten für den betreffenden Streckenabschnitt enthält, da eine Georeferenzierung in diesem Streckenabschnitt nicht möglich ist. Allerdings enthält der Telemetrie-Datensatz bzw. Mobilfunk-Telemetrie-Datensatz Informationen an den Wegpunkten, an denen beim Vorschub der Baumaschine GNSS-Signale nicht mehr empfangen werden, d. h. die Signalstärke 0 ist, und an den Wegpunkten, an denen GNSS-Signale wieder empfangen werden, d. h. die Signalstärke wieder größer 0 ist. Wenn beispielsweise Mobilfunksignale empfangen werden, GNSS-Signale aber nicht empfangen werden, können die Wegpunkte, an denen die Mobilfunk-Signale bewertet werden, auf der Grundlage zusätzlicher Informationen (Daten) und/oder zusätzlicher Systeme ermittelt werden, so dass eine Georeferenzierung dennoch erfolgen kann. Beispielsweise kann die Position der Baumaschine unter Berücksichtigung der bekannten Positionen, an denen der Signalempfang ausfällt bzw. wiedereinsetzt, approximiert werden. Die GNSS-Bewertungsgrößen-Erfassungseinrichtung kann beispielsweise auch mit einem inertialen Navigationssystem (INS (Inertial Navigation System)) zusammenwirken, das über eine inertiale Messeinheit (Inertial Measurement Unit (IMU)) mit mehreren Beschleunigungs- und Drehratensensoren verfügt, um die räumliche Bewegung der Baumaschine und daraus deren jeweilige Position fortlaufend zu bestimmen.

Im Folgenden wird ein Ausführungsbeispiel der Erfindung unter Bezugnahme auf die Figuren im Einzelnen beschrieben.

Es zeigen:
- Fig. 1: ein Ausführungsbeispiel einer erfindungsgemäßen Baumaschine in der Seitenansicht,
- Fig. 2: eine stark vereinfachte schematische Darstellung der Baumaschine,
- Fig. 3A: die Baumaschine während der Bearbeitung des Bodens in einem ersten Arbeitsschritt,
- Fig. 3B: die Baumaschine während der Bearbeitung des Bodens in einem zweiten Arbeitsschritt,
- Fig. 4: eine Tabelle mit den Daten des raumbezogenen GNSS-Telemetrie-Datensatzes und
- Fig. 5: die Visualisierung des GNSS-Telemetrie-Datensatzes auf dem Bildschirm einer Datenverarbeitungseinrichtung.

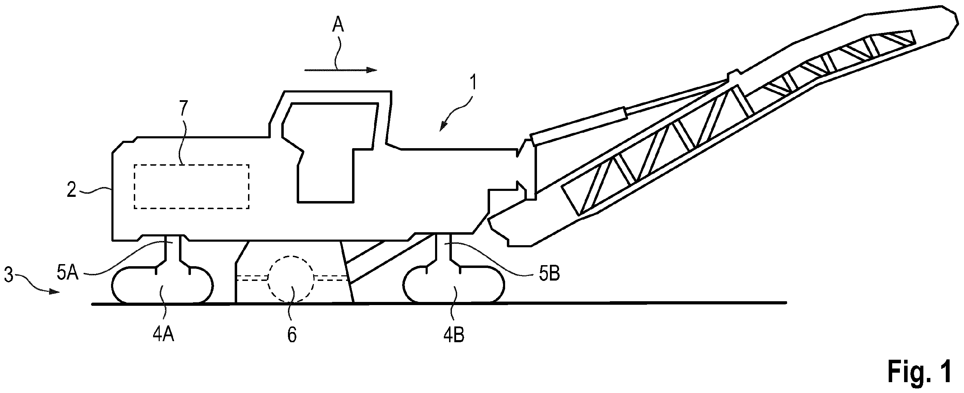

Fig. 1 zeigt als Beispiel für eine selbstfahrende Baumaschine 1 eine Straßenfräsmaschine in der Seitenansicht.

Die Baumaschine 1 weist einen Maschinenrahmen 2 auf, der von einem Fahrwerk 3 getragen wird. Das Fahrwerk 3 weist zwei hintere und zwei vordere, lenkbare Laufwerke 4A, 4B auf, die an hinteren und vorderen Hubsäulen 5A, 5B befestigt sind, so dass die Baumaschine 1 im Gelände translatorische und/oder rotatorische Bewegungen ausführen kann. Die Baumaschine 1 verfügt über eine Arbeitseinrichtung 6 zum Bearbeiten des Bodens. Bei dem vorliegenden Ausführungsbeispiel ist die Arbeitseinrichtung eine mit Fräswerkzeugen bestückten Fräswalze. Zum Antreiben der Laufwerke 4A, 4B und der Arbeitseinrichtung 6 ist eine in Fig. 1 nur andeutungsweise dargestellte Antriebeinrichtung 7 vorgesehen. Die Arbeitsrichtung (Fahrtrichtung) der Baumaschine 1 ist mit einem Pfeil A gekennzeichnet.

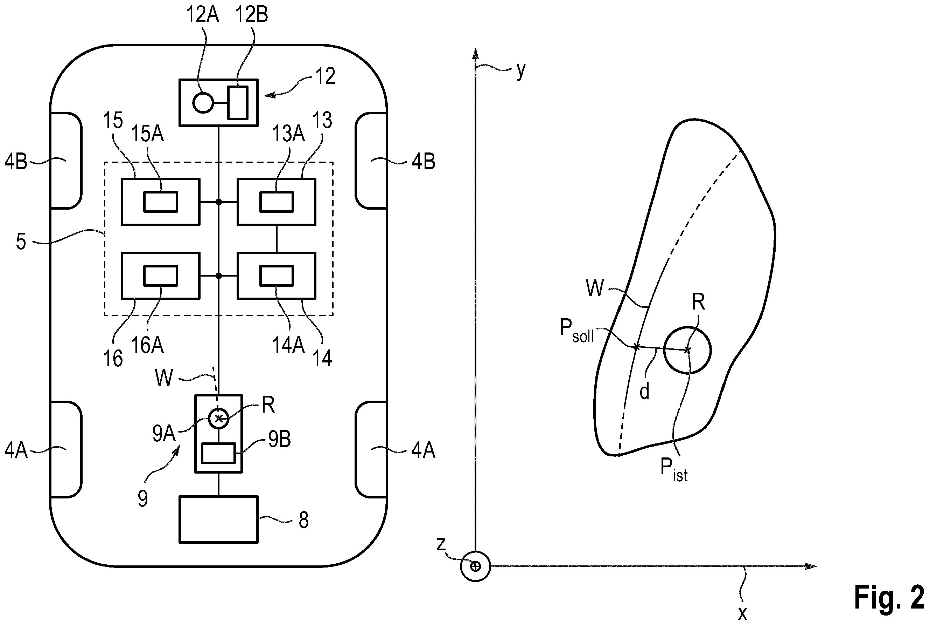

Fig. 2 zeigt eine stark vereinfachte schematischer Darstellung der Baumaschine 1 von Fig. 1. Die einander entsprechenden Teile sind mit den gleichen Bezugszeichen versehen.

Bei dem vorliegenden Ausführungsbeispiel verfügt die Baumaschine 1 über eine automatische Steuerung unter der Verwendung eines globalen Navigationssatellitensystems (GNSS). Eine derartige Steuerung gehört zum Stand der Technik. Die Steuereinrichtung 8 zur Ansteuerung der Antriebseinrichtung 7 der Baumaschine 1 steuert die Laufwerke 4A, 4B derart an, dass sich ein Referenzpunkt R der Baumaschine entlang einer bestimmten Wegstrecke W, d. h. auf der Wegstrecke oder in einem Abstand zu der Wegstrecke (Äquidistante) bewegt. Der Referenzpunkt R kann ein beliebiger Punkt auf der Baumaschine sein. Die Steuereinrichtung 8 ist derart konfiguriert, dass die lenkbaren Laufwerke 4A, 4B derart angesteuert werden, dass der Abstand d zwischen der von einer Soll-Wegstrecke beschriebenen Soll-Position Pₛₒₗₗ und der Ist-Position Pᵢₛₜ des Referenzpunktes R minimal ist. Fig. 2 zeigt in vergrößerter Darstellung auf der rechten Bildhälfte eine Abweichung d der Ist-Position Pᵢₛₜ von der Soll-Position Pₛₒₗₗ. Der Referenzpunkt R der Baumaschine 1 auf der linken Bildhälfte liegt auf der Soll-Wegstrecke W. Die Soll-Wegstrecke W kann beispielsweise den Verlauf einer Straße beschreiben.

Die Bestimmung der Ist-Position Pᵢₛₜ des Referenzpunktes R erfolgt unter Verwendung des GNSS mit einem GNSS-Empfänger 9, der eine an dem Referenzpunkt R angeordnete Antenne 9A zum Empfangen von GNSS-Signalen einer Mehrzahl von Satelliten 10 eines globalen Navigationssatellitensystem (GNSS) und eine Recheneinheit 9B zur Verarbeitung von GNSS-Signalen und Ausgabe von die Position des Referenzpunktes beschreibenden Positionsdaten in einem von der Baumaschine unabhängigen Koordinatensystem (x, y, z) aufweist. Ein derartiger GNSS-Empfänger gehört zum Stand der Technik. Die von dem GNSS-Empfänger empfangenen GNSS-Signale können auch Korrektursignale zur Erhöhung der Genauigkeit der Positionsbestimmung umfassen (DGNSS).

Zum Aufbau einer Mobilfunkverbindung zu einer Mobilfunkeinheit 11 eines Mobilfunkanbieters weist die Baumaschine 1 eine Mobilfunk-Kommunikationseinrichtung 12 auf, die eine Mobilfunkantenne 12A zum Senden und Empfangen eines Mobilfunksignals und eine Recheneinheit 12B zur Verarbeitung eines Mobilfunksignals aufweist. Eine derartige Mobilfunk-Kommunikationseinrichtung gehört ebenfalls zum Stand der Technik. Korrektursignale zur Erhöhung der Genauigkeit der Positionsbestimmung können auch von der Mobilfunk-Kommunikationseinrichtung empfangen werden, wenn Korrektursignale über ein GSM zur Verfügung stehen und diese Korrektursignale verwendet werden sollen.

Darüber hinaus umfasst die Baumaschine 1 eine GNSS-Bewertungseinrichtung 13 und eine GNSS-Bewertungsgrößen-Erfassungseinrichtung 14 und/oder eine Mobilfunk-Bewertungseinrichtung 15 und eine Mobilfunk-Bewertungsgrößen-Erfassungseinrichtung 16, die jeweils eine separate Recheneinheit 13A, 14A, 15A, 16A zur Verarbeitung der Daten aufweisen können. Die GNSS-Bewertungseinrichtung und GNSS-Bewertungsgrößen-Erfassungseinrichtung bzw. die Mobilfunk-Bewertungseinrichtung und die Mobilfunk-Bewertungsgrößen-Erfassungseinrichtung können auch eine gemeinsame Recheneinheit aufweisen. Die Recheneinheit(en) kann bzw. können auch Bestandteil einer zentralen Rechen- und Steuereinheit (S) zur Steuerung des Betriebs der Baumaschine sein. Die Hardware-Komponenten können beispielsweise allgemeine Prozessoren, digitale Signalprozessoren (DSP) zur kontinuierlichen Bearbeitung digitaler Signale, Mikroprozessoren, anwendungsspezifische integrierte Schaltungen (ASIC), aus Logikelementen bestehende integrierte Schaltkreise (FPGA) oder andere integrierte Schaltkreise (IC), um die nachfolgend beschriebenen Rechenoperationen auszuführen. Auf den Hardware-Komponenten kann ein Datenverarbeitungsprogramm (Software) laufen, um die einzelnen Verfahrensschritte auszuführen.

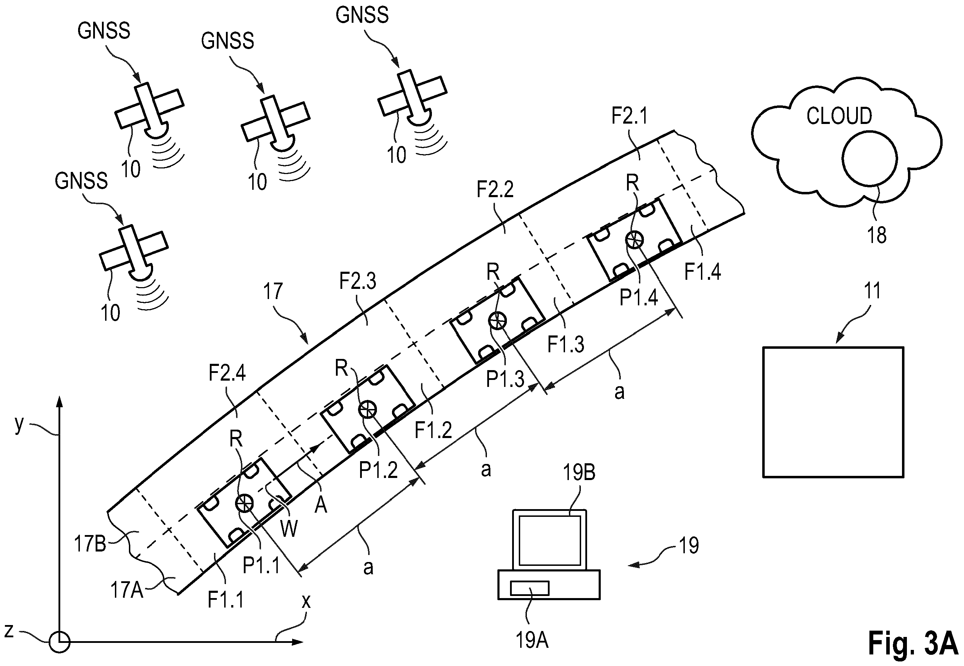

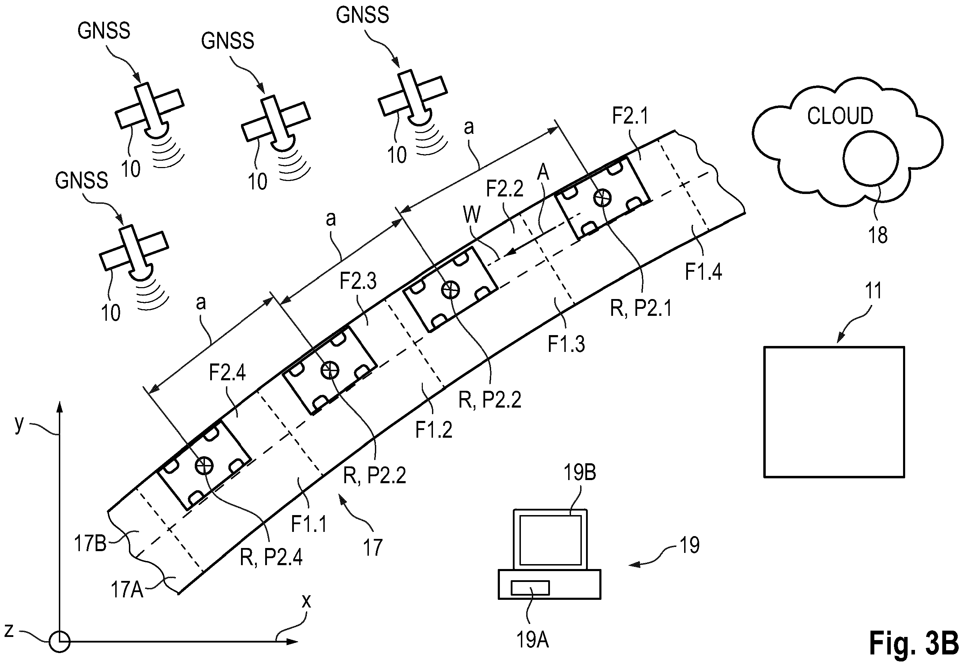

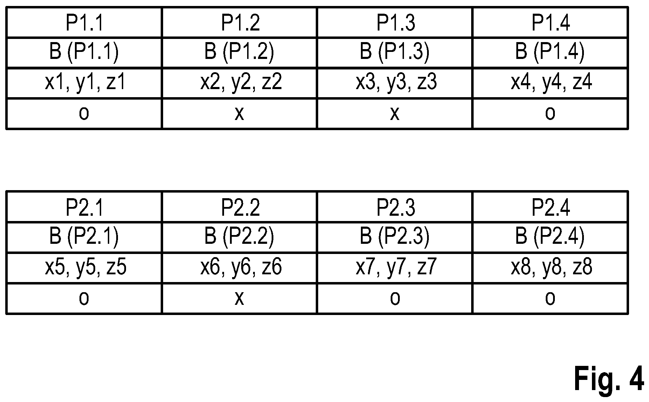

Nachfolgend wird die Funktion der GNSS-Bewertungseinrichtung 13 und der GNSS-Bewertungsgrößen-Erfassungseinrichtung 14 unter Bezugnahme auf die Figuren 3A und 3B und Figur 4 beschrieben.

Die Figuren 3A und 3B zeigen eine von der Baumaschine 1 zu bearbeitende Straße 17, die eine linke und rechte Fahrspur 17A, 17B hat. Bei dem vorliegenden Ausführungsbeispiel soll die schadhafte Straße 17 mit der Baumaschine 1 zunächst abgefräst werden. Zu einem späteren Zeitpunkt soll mit einem Straßenfertiger Asphalt eingebaut werden.

Die Baumaschine 1 bearbeitet in einem ersten Arbeitsgang die rechte Fahrspur 17A (Fig. 3A) und in einem zweiten Arbeitsgang die linke Fahrspur 17B (Fig. 3B). In den Figuren 3A und 3B ist die Arbeitsrichtung der Baumaschine 1 mit A und der Referenzpunkt der Baumaschine, an dem sich die Antenne 9A des GNSS-Empfängers 9 befindet, mit R bezeichnet. Während des Vorschubs der Baumaschine 1 in Arbeitsrichtung A erzeugt der GNSS-Empfänger 9 die Positionsdaten auf der rechten Straßenhälfte 17A zumindest an den Wegpunkten P1.1, P1.2, P1.3, P1.4 und auf der linken Straßenhälfte 17B an den Wegpunkten P2.1, P2.2, P2.3, P2.4.

Die GNSS-Bewertungseinrichtung 13 ist derart eingerichtet, dass während des Vorschubs der Baumaschine 1 an einer Mehrzahl von Orten im Gelände jeweils mindestens eine die Qualität der GNSS-Signale an dem jeweiligen Ort bewertende GNSS-Bewertungsgröße B ermittelt wird. Im vorliegenden Ausführungsbeispiel erfolgt die Bewertung der GNSS-Signale beim Vorschub der Baumaschine 1 auf der rechten Straßenhälfte 17A an den Wegpunkten P1.1, P1.2, P1.3, P1.4 und auf der linken Straßenhälfte 17B an den Wegpunkten P2.1, P2.2, P2.3, P2.4. Die Datenerfassung erfolgt jeweils nach Zurücklegen einer vorgegebenen Wegstrecke a oder nach Ablauf eines vorgegebene Zeitintervalls Δt. Folglich lässt sich die Fahrbahn in eine Folge von Bereichen oder Feldern F1.1, F1.2, F1.3, F1.4 und F2.1, F2.2, F2.3, F2.4 aufteilen, in denen die Datenerfassung erfolgt. Bei dem vorliegenden Ausführungsbeispiel haben diese Bereiche jeweils die gleiche Größe, weil die Wegstrecke a bzw. das Zeitintervalls Δt während des gleichförmigen Vorschubs der Maschine nicht verändert wird. Die Bereiche können aber auch unterschiedliche Größen haben oder die Datenerfassung kann kontinuierlich erfolgen.

Bei dem vorliegenden Ausführungsbeispiel wird aus der Signalstärke der GNSS-Signale, die auch Korrektursignale umfassen, für jeden Bereich F1.1, F1.2, F1.3, F1.4 und F2.1, F2.2, F2.3, F2.4 eine Bewertungsgröße B ermittelt, beispielsweise die mittlere Signalstärke der empfangenen GNSS-Signale. Die einzelnen Bewertungsgrößen werden in einem Speicher in Form einer Tabelle abgelegt.

Die Signalstärke ist aber nur als ein Beispiel für eine Bewertungsgröße B zu verstehen. Die Bewertungsgröße kann jede Größe sein, welche bei einem DGNSS für die Genauigkeit der Positionsbestimmung entscheidend ist. Diese Größe kann auch eine für die Qualität von Korrektursignalen charakteristische Größe sein. Das vorliegende Ausführungsbeispiel beschreibt nur die Bestimmung jeweils einer Bewertungsgröße. Es können aber auch mehrere Bewertungsgrößen bestimmt werden. Aus mehreren Bewertungsgrößen können auch wieder einzelne Bewertungsgrößen ermittelt werden.

Die GNSS-Bewertungsgrößen-Erfassungseinrichtung 14 ist derart eingerichtet, dass mit den Positionsdaten, die von dem GNSS-Empfänger 9 an den jeweiligen Orten (Wegpunkten) im Gelände ermittelt werden, ein die Qualität der GNSS-Signale an den jeweiligen Orten (Wegpunkten) beschreibender raumbezogener GNSS-Telemetrie-Datensatz erzeugt wird.

Die GNSS-Bewertungsgrößen-Erfassungseinrichtung 14 ist derart eingerichtet, dass den einzelnen Wegpunkten P1.1, P1.2, P1.3, P1.4 und P2.1, P2.2, P2.3, P2.4. die von dem GNSS-Empfänger 9 ermittelten Positionsdaten zugeordnet werden.

Fig. 4 zeigt die Tabelle, in der die an den Wegpunkten P1.1, P1.2, P1.3, P1.4 auf der rechten Straßenhälfte 17A und an den Wegpunkten P2.1, P2.2, P2.3, P2.4. auf der linken Straßenhälfte 17B ermittelten Bewertungsgrößen B(P1.1), B(P1.2), B(P1.3), B(P1.4) bzw. B(P2.1), B(P2.2), B(P2.3), B(P1.4) abgelegt sind, wobei den Wegpunkten P1.1, P1.2, P1.3, P1.4 und P2.1, P2.2, P2.3, P2.4 Koordinaten x, y, z (Positionsdaten) in einem von der Baumaschine 1 unabhängigen Koordinatensystem zugeordnet sind. Bei dem vorliegenden Ausführungsbeispiel bilden diese Daten den GNSS-Telemetrie-Datensatz, der in einem Speicher gespeichert wird.

Darüber hinaus kann die GNSS-Bewertungsgrößen-Erfassungseinrichtung 14 derart eingerichtet sein, dass zur Erzeugung des raumbezogenen GNSS-Telemetrie-Datensatzes die mindestens eine die Qualität des GNSS-Signals an dem jeweiligen Ort bewertende GNSS-Bewertungsgröße unter Berücksichtigung mindestens eines Bewertungskriteriums ausgewertet wird. Bei dem vorliegenden Ausführungsbeispiel wird die mittlere Signalstärke der an den jeweiligen Wegpunkten empfangenen GNSS-Signale mit einem vorgegebene Grenzwert verglichen, um die Entscheidung zu treffen, ob die GNSS-Bewertungsgröße an den einzelnen Wegpunkten dem Bewertungskriterium genügt oder nicht genügt, d. h. die mittlere Signalstärke größer als der Grenzwert ist oder nicht. Wenn die mittlere Signalstärke größer als der Grenzwert ist, wird angenommen, dass für den späteren Einbau des Asphalts mit dem Straßenfertiger keine weiteren Vorkehrungen zu treffen sind. Wenn die mittlere Signalstärke jedoch kleiner als der Grenzwert ist, müssen geeignete Vorkehrungen getroffen werden. Bei dem vorliegenden Ausführungsbeispiel umfasst der GNSS-Telemetrie-Datensatz Daten, die kennzeichnen, ob die mittlere Signalstärke größer als der Grenzwert ist oder nicht, was in der Tabelle mit den Symbolen O (größer als der Grenzwert) oder X (kleiner als der Grenzwert oder gleich Grenzwert) veranschaulicht wird.

Die GNSS-Bewertungsgrößen-Erfassungseinrichtung 14 wirkt derart mit der Mobilfunk-Kommunikationseinrichtung 12 zusammen, dass der raumbezogene GNSS-Telemetrie-Datensatz an einen Cloud-Speicher 18 eines Internetdienstanbieters gesendet wird. Folglich steht der GNSS-Telemetrie-Datensatz für eine weitere Verarbeitung jederzeit zur Verfügung.

Die Baumaschine 1, der Cloud-Speicher 18 und eine Datenverarbeitungseinrichtung 19, die über eine Mobilfunk-Kommunikationseinrichtung 19A zum Aufbau einer Mobilfunkverbindung verfügt, bilden ein System zur Bodenbearbeitung, das die Evaluierung der GNSS-Signale erlaubt. Der Mobilfunk-Telemetrie-Datensatz kann mit der Datenverarbeitungseinrichtung 19 aus dem Cloud-Speicher 18 ausgelesen werden und für eine weitere Auswertung und Visualisierung verarbeitet werden.

Bei dem vorliegenden Ausführungsbeispiel ist die GNSS-Bewertungsgrößen-Erfassungseinrichtung 14 weiterhin derart eingerichtet, dass den Werten der mindestens einen die Qualität der GNSS-Signale an dem jeweiligen Ort bewertenden GNSS-Bewertungsgröße B(P1.1), B(P1.2), B(P1.3), B(P1.4) bzw. B(P2.1), B(P2.2), B(P2.3), B(P2.4) durch unterschiedliche Farben oder Schattierungen gekennzeichnete Bereiche F1.1, F1.2, F1.3, F1.4 und F2.1, F2.2, F2.3, F2.4 zugeordnet werden, um die Werte der mindestens einen GNSS-Bewertungsgröße an den jeweiligen Orten in einer graphischen Darstellung der von der Baumaschine 1 zu bearbeitenden Fläche (Straße) als farbcodierte oder durch unterschiedliche Schattierungen codierte Bereiche oder Felder darzustellen. Die GNSS-Bewertungsgrößen-Erfassungseinrichtung 14 kann eine Bilddatei erzeugen, welche die entsprechenden Bilddaten enthält, wobei die Bilddatei in den Cloud-Speicher 18 hochgeladen wird. Diese Bilddatei kann dann mit der Datenverarbeitungseinrichtung 19 aus dem Cloud-Speicher 18 heruntergeladen, geöffnet und auf einem Bildschirm 19B der Datenverarbeitungseinrichtung 19 angezeigt werden.

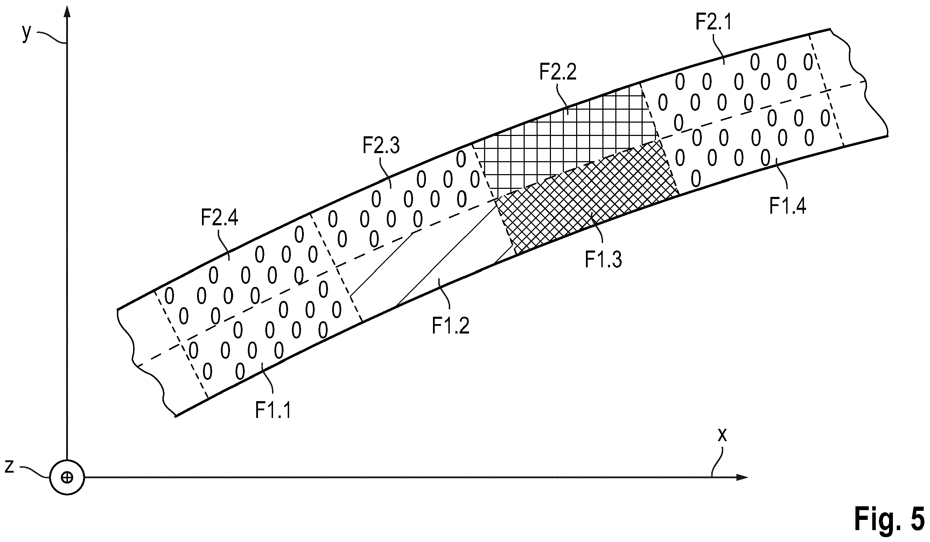

Fig. 5 zeigt eine graphische Darstellung der zu bearbeitenden Straße in einem (x, y, z)-Koordinatensystem, wobei in der Straße 17 die unter Bezugnahme auf die Figuren 3A und 3B beschriebenen Bereiche oder Felder F1.1, F1.2, F1.3, F1.4 und F2.1, F2.2, F2.3, F2.4 gekennzeichnet sind, in denen die Qualität der GNSS-Signale dargestellt ist. Bei dem vorliegenden Ausführungsbeispiel sind die Bereiche F1.1, F1.2, F1.3, F1.4 und F2.1, F2.2, F2.3, F2.4, in denen die Signalqualität ausreichend ist, mit den Symbolen O gekennzeichnet, während die Bereiche F1.1, F1.2, F1.3, F1.4 und F2.1, F2.2, F2.3, F2.4, in denen die Signalqualität nicht ausreichend ist, schraffiert sind. Die Stärke der Abschattung wird durch die Dichte der Schraffur gekennzeichnet, wobei eine Dichte Schraffur eine starke Abschattung bedeutet.

Die Baumaschine 1 erlaubt nicht nur die Evaluierung der Qualität der GNSS-Signale, sondern auch des von der Mobilfunk-Kommunikationseinrichtung 19 empfangenen Mobilfunksignals. Die Mobilfunk-Bewertungseinrichtung 15 und die Mobilfunk-Bewertungsgrößen-Erfassungseinrichtung 16 unterscheiden sich von der GNSS-Bewertungseinrichtung 13 und der GNSS-Bewertungsgrößen-Erfassungseinrichtung 14 dadurch, dass nicht die GNSS-Signale mehrerer Satelliten 10, sondern das Mobilfunksignal evaluiert wird. Folglich werden andere Bewertungsgrößen oder Bewertungskriterien festgelegt. Die Mobilfunk-Bewertungseinrichtung 15 ist bei dem vorliegenden Ausführungsbeispiel derart eingerichtet, dass als eine die Qualität des Mobilfunk-Signals bewertende Mobilfunk-Bewertungsgröße ein mit der Signalstärke des Mobilfunk-Signals korrelierender Wert und/oder ein mit der Laufzeit des Mobilfunksignals korrelierender Wert und/oder ein mit der Upload-Rate und/oder Download-Rate des Mobilfunksignals korrelierender Wert ermittelt wird. Beispielsweise kann der RSSI(Received Signal Strength Indicator)-Wert des Mobilfunksignals mit einem vorgegebenen Grenzwert verglichen werden, der für eine ordnungsgemäße Mobilfunkverbindung ausreichend ist. Die Visualisierung kann in der gleichen Weise wie bei den GNSS-Signalen erfolgen. Die Bereiche F1.1, F1.2, F1.3, F1.4 und F2.1, F2.2, F2.3, F2.4 der Straße 17, in denen die Signalstärke des Mobilfunksignals oberhalb bzw. unterhalb des Grenzwertes liegt, können in einem Plan dargestellt werden, der dem in der Fig. 5 gezeigten Plan entspricht.

Die Mobilfunk-Bewertungseinrichtung 15 und die Mobilfunk-Bewertungsgrößen-Erfassungseinrichtung 16 haben ansonsten einen analogen Aufbau und eine analoge Funktionsweise, so dass auf die Beschreibung der GNSS-Bewertungsgrößen-Erfassungseinrichtung 13 und der GNSS-Bewertungsgrößen-Erfassungseinrichtung 14 Bezug genommen wird.

Der GNSS-Empfänger (9) und die Mobilfunk-Kommunikationseinrichtung 12 können auch wie folgt zusammenwirken.

Wenn Korrektursignale zur Erhöhung der Genauigkeit der Positionsbestimmung von der Mobilfunk-Kommunikationseinrichtung 12 empfangen werden, kann die Mobilfunk-Bewertungseinrichtung 15 auch eine die Qualität der Korrektursignale bewertende Bewertungsgröße ermitteln.

Für den Fall, dass die Positionsbestimmung auf der Grundlage der Verarbeitung von in den GNSS-Signalen enthaltenen Korrektursignalen erfolgt, welche von dem GNSS-Empfänger empfangen werden und festgestellt werden sollte, dass die von dem GNSS-Empfänger zu verarbeitenden Korrektursignale eine nicht ausreichende Qualität haben, kann die Recheneinheit (9B) des GNSS-Empfängers (9) derart konfiguriert sein, dass die Positionsbestimmung nicht auf der Grundlage von Korrektursignalen erfolgt, die von dem GNSS-Empfänger empfangen werden, sondern von Korrektursignalen, die von der Mobilfunk-Kommunikationseinrichtung 12 empfangen werden. Hierbei kann auch überprüft werden, ob diese Korrektursignale eine ausreichende Qualität haben. In analoger Betrachtungsweise kann der GNSS-Empfänger (9) auch derart konfiguriert sein, dass bei einer Feststellung einer nicht ausreichenden Qualität von Korrektursignalen, die von der Mobilfunk-Kommunikationseinrichtung 12 empfangen werden, die Positionsbestimmung auf der Grundlage von Korrektursignalen erfolgt, die von dem GNSS-Empfänger empfangen werden.

## Patentansprüche

1. Selbstfahrende Baumaschine, insbesondere Straßenfräsmaschine oder Straßenfertiger, zur Bearbeitung des Bodens oder Errichtung eines Bauwerks auf dem Boden in einem vorausgehenden Arbeitsprozess, dem ein anderer Arbeitsprozess mit einer anderen Baumaschine folgt, wobei die Baumaschine(1) aufweist:
einen von Laufwerken (4A, 4B) getragenen Maschinenrahmen (2), an dem eine Arbeitseinrichtung (6) vorgesehen ist,
mindestens eine Antriebseinrichtung (7) zum Antreiben der Laufwerke (4A, 4B),
eine Mobilfunk-Kommunikationseinrichtung (12), die eine Mobilfunkantenne (12A) zum Senden und Empfangen eines Mobilfunksignals und eine Recheneinheit (12B) zur Verarbeitung eines Mobilfunksignals aufweist,
einen GNSS-Empfänger (9), der eine an einem Referenzpunkt (R) der Baumaschine angeordnete Antenne (9A) zum Empfangen von GNSS-Signalen einer Mehrzahl von Satelliten eines globalen Navigationssatellitensystem und eine Recheneinheit (9B) zur Verarbeitung von GNSS-Signalen und Ausgabe von die Position des Referenzpunktes (R) beschreibenden Positionsdaten umfasst,
**dadurch gekennzeichnet, dass**
die Baumaschine (1) ferner aufweist:
eine GNSS-Bewertungseinrichtung (13), die derart eingerichtet ist, dass während des Vorschubs der Baumaschine an einer Mehrzahl von Orten im Gelände jeweils mindestens eine die Qualität der GNSS-Signale an dem jeweiligen Ort bewertende GNSS-Bewertungsgröße (B) ermittelt wird, und
eine GNSS-Bewertungsgrößen-Erfassungseinrichtung (14), die derart eingerichtet ist, dass mit den von dem GNSS-Empfänger (9) an den jeweiligen Orten im Gelände ermittelten Positionsdaten ein die Qualität der GNSS-Signale an den jeweiligen Orten beschreibender raumbezogener GNSS-Telemetrie-Datensatz erzeugt wird, wobei
die GNSS-Bewertungsgrößen-Erfassungseinrichtung (14) derart mit der Mobilfunk-Kommunikationseinrichtung (12) zusammenwirkt, dass der raumbezogene GNSS-Telemetrie-Datensatz an einen Cloud-Speicher (18) gesendet wird,
und/oder
eine Mobilfunk-Bewertungseinrichtung (15), die derart eingerichtet ist, dass während des Vorschubs der Baumaschine an einer Mehrzahl von Orten im Gelände jeweils mindestens eine die Qualität des Mobilfunksignals an dem jeweiligen Ort bewertende Mobilfunk-Bewertungsgröße (B) ermittelt wird,
eine Mobilfunk-Bewertungsgrößen-Erfassungseinrichtung (16), die derart eingerichtet ist, dass mit den von dem GNSS-Empfänger (9) an den jeweiligen Orten im Gelände ermittelten Positionsdaten ein die Qualität des Mobilfunksignals an den jeweiligen Orten beschreibender raumbezogener Mobilfunk-Telemetrie-Datensatz erzeugt wird, wobei
die Mobilfunk-Bewertungsgrößen-Erfassungseinrichtung (16) derart mit der Mobilfunk-Kommunikationseinrichtung (12) zusammenwirkt, dass der raumbezogene Mobilfunk-Telemetrie-Datensatz an einen Cloud-Speicher (18) gesendet wird.

2. Selbstfahrende Baumaschine nach Anspruch 1, **dadurch gekennzeichnet, dass** die GNSS-Bewertungsgrößen-Erfassungseinrichtung (14) derart eingerichtet ist, dass zur Erzeugung des raumbezogenen GNSS-Telemetrie-Datensatzes während des Vorschubs der Baumaschine die mindestens eine die Qualität der GNSS-Signale an dem jeweiligen Ort bewertende GNSS-Bewertungsgröße jeweils nach Zurücklegen einer vorgegebenen Wegstrecke (a) oder nach Ablauf eines vorgegebenen Zeitintervalls (Δt) erfasst wird.

3. Selbstfahrende Baumaschine nach Anspruch 1 oder 2, **dadurch gekennzeichnet, dass** die GNSS-Bewertungsgrößen-Erfassungseinrichtung (14) derart eingerichtet ist, dass den Werten der mindestens einen die Qualität der GNSS-Signale an dem jeweiligen Ort bewertenden GNSS-Bewertungsgröße (B) Farben zugeordnet werden, um die Werte der mindestens einen GNSS-Bewertungsgröße an den jeweiligen Orten in einer graphischen Darstellung der von der Baumaschine zu bearbeitenden Fläche als farbcodierte Bereiche (F) darzustellen.

4. Selbstfahrende Baumaschine nach einem der Ansprüche 1 bis 3, **dadurch gekennzeichnet, dass** die GNSS-Bewertungsgrößen-Erfassungseinrichtung (14) derart eingerichtet ist, dass zur Erzeugung des raumbezogenen GNSS-Telemetrie-Datensatzes die mindestens eine die Qualität der GNSS-Signale an dem jeweiligen Ort bewertende GNSS-Bewertungsgröße (B) unter Berücksichtigung mindestens eines Bewertungskriteriums ausgewertet wird, wobei die GNSS-Bewertungsgrößen-Erfassungseinrichtung (14) eingerichtet ist, um die Entscheidung zu treffen, ob die mindestens eine GNSS-Bewertungsgröße an dem jeweiligen Ort dem mindestens einem Bewertungskriterium genügt oder die mindestens eine GNSS-Bewertungsgröße dem mindestens einem Bewertungskriterium nicht genügt.

5. Selbstfahrende Baumaschine nach einem der Ansprüche 1 bis 4, **dadurch gekennzeichnet, dass** die GNSS-Bewertungseinrichtung (13) derart eingerichtet ist, dass als eine die Qualität der GNSS-Signale bewertende GNSS-Bewertungsgröße (B) ein mit die Signalstärke der GNSS-Signale der Satelliten eines globalen Navigationssatellitensystems korrelierender Wert und/oder ein mit der Sattelitengeometrie korrelierender Wert ermittelt wird.

6. Selbstfahrende Baumaschine nach Anspruch 1, **dadurch gekennzeichnet, dass** die Mobilfunk-Bewertungsgrößen-Erfassungseinrichtung (16) derart eingerichtet ist, dass zur Erzeugung des raumbezogenen Mobilfunk-Telemetrie-Datensatzes während des Vorschubs der Baumaschine die mindestens eine von der Mobilfunk-Bewertungseinrichtung (15) ermittelte Mobilfunk-Bewertungsgröße jeweils nach Zurücklegen einer vorgegebenen Wegstrecke (a) oder nach Ablauf eines vorgegebenen Zeitintervalls (Δt) erfasst wird.

7. Selbstfahrende Baumaschine nach Anspruch 1 oder 6, **dadurch gekennzeichnet, dass** die Mobilfunk-Bewertungsgrößen-Erfassungseinrichtung (16) derart eingerichtet ist, dass den Werten der mindestens einen die Qualität des Mobilfunk-Signals an dem jeweiligen Ort bewertenden Mobilfunk-Bewertungsgröße (B) Farben zugeordnet werden, um die Werte der mindestens einen Mobilfunk-Bewertungsgröße an den jeweiligen Orten in einer graphischen Darstellung der von der Baumaschine zu bearbeitenden Fläche (F) als farbcodierte Bereiche darzustellen.

8. Selbstfahrende Baumaschine nach Anspruch 1, 6 oder 7, **dadurch gekennzeichnet, dass** die Mobilfunk-Bewertungsgrößen-Erfassungseinrichtung (16) derart eingerichtet ist, dass zur Erzeugung des raumbezogenen Mobilfunk-Telemetrie-Datensatzes die mindestens eine die Qualität des Mobilfunk-Signals an dem jeweiligen Ort bewertende Mobilfunk-Bewertungsgröße (B) unter Berücksichtigung mindestens eines Bewertungskriteriums ausgewertet wird, wobei die Mobilfunk-Bewertungsgrößen-Erfassungseinrichtung (16) eingerichtet ist, um die Entscheidung zu treffen, ob die mindestens eine Mobilfunk-Bewertungsgröße an dem jeweiligen Ort dem mindestens einen Bewertungskriterium genügt oder die mindestens eine Bewertungsgröße dem mindestens einen Bewertungskriterium nicht genügt.

9. Selbstfahrende Baumaschine nach Anspruch 1 oder 6 bis 8, **dadurch gekennzeichnet, dass** die Mobilfunk-Bewertungseinrichtung (16) derart eingerichtet ist, dass als eine die Qualität des Mobilfunk-Signals bewertende Mobilfunk-Bewertungsgröße (B) ein mit der Signalstärke des Mobilfunk-Signals korrelierender Wert und/oder ein mit der Laufzeit des Mobilfunksignals korrelierender Wert und/oder ein mit der Upload-Rate und/oder Download-Rate des Mobilfunksignals korrelierender Wert ermittelt wird.

10. Verfahren zur Bearbeitung des Bodens oder Errichtung eines Bauwerks auf dem Boden mit einer selbstfahrenden Baumaschine, insbesondere Straßenfräsmaschine oder Straßenfertiger, in einem vorausgehenden Arbeitsprozess, dem ein anderer Arbeitsprozess mit einer anderen Baumaschine folgt, wobei die Baumaschine eine Mobilfunk-Kommunikationseinrichtung zum Aufbau einer Mobilfunkverbindung und einen GNSS-Empfänger zum Ermitteln von die Position eines Referenzpunktes der Baumaschine beschreibenden Positionsdaten aufweist,
**dadurch gekennzeichnet, dass**
während des Vorschubs der Baumaschine an einer Mehrzahl von Orten im Gelände jeweils mindestens eine die Qualität der von dem GNSS-Empfänger empfangenen GNSS-Signale an dem jeweiligen Ort bewertende GNSS-Bewertungsgröße ermittelt wird, und
mit den Positionsdaten des GNSS-Empfängers ein die Qualität der GNSS-Signale an den jeweiligen Orten im Gelände beschreibender raumbezogener GNSS-Telemetrie-Datensatz erzeugt wird, wobei
der raumbezogene GNSS-Telemetrie-Datensatz mit der Mobilfunk-Kommunikationseinrichtung an einen Cloud-Speicher gesendet wird,
und/oder
während des Vorschubs der Baumaschine an einer Mehrzahl von Orten im Gelände jeweils mindestens eine die Qualität des von der Mobilfunk-Kommunikationseinrichtung empfangenen Mobilfunk-Signals an dem jeweiligen Ort bewertende Mobilfunk-Bewertungsgröße ermittelt wird, und
mit den Positionsdaten des GNSS-Empfängers ein die Qualität der Mobilfunk-Signale an den jeweiligen Orten im Gelände beschreibender raumbezogener Mobilfunk-Telemetrie-Datensatz erzeugt wird, wobei
der raumbezogene Mobilfunk-Telemetrie-Datensatz mit der Mobilfunk-Kommunikationseinrichtung an einen Cloud-Speicher gesendet wird.

11. Verfahren nach Anspruch 10, **dadurch gekennzeichnet, dass** als eine die Qualität der GNSS-Signale bewertende GNSS-Bewertungsgröße ein mit die Signalstärke der GNSS-Signale der Satelliten eines globalen Navigationssatellitensystems korrelierender Wert und/oder ein mit der Sattelitengeometrie korrelierender Wert ermittelt wird.

12. Verfahren nach Anspruch 10, **dadurch gekennzeichnet, dass** als eine die Qualität des Mobilfunk-Signals bewertende Bewertungsgröße ein mit der Signalstärke des Mobilfunk-Signals korrelierender Wert und/oder ein mit der Laufzeit des Mobilfunksignals korrelierender Wert und/oder ein mit der Upload-Rate und/oder Download-Rate des Mobilfunk-Signals korrelierender Wert ermittelt wird.

13. Verfahren nach einem der Ansprüche 10 bis 12, **dadurch gekennzeichnet, dass** eine Datenverarbeitungseinrichtung mit einer Mobilfunk-Kommunikationseinrichtung zum Aufbau einer Mobilfunkverbindung bereitgestellt wird, und der GNSS-Telemetrie-Datensatz bzw. Mobilfunk-Telemetrie-Datensatz mit der Datenverarbeitungseinrichtung aus dem Cloud-Speicher ausgelesen wird und die Daten des GNSS-Telemetrie-Datensatzes bzw. Mobilfunk-Telemetrie-Datensatzes mit der Datenverarbeitungseinrichtung verarbeitet werden.

14. Verfahren nach Anspruch 13, **dadurch gekennzeichnet, dass** die mit der Datenverarbeitungseinrichtung verarbeiteten Daten des GNSS-Telemetrie-Datensatzes bzw. Mobilfunk-Telemetrie-Datensatzes auf einem Bildschirm der Datenverarbeitungseinrichtung visualisiert werden.

15. System umfassend eine selbstfahrende Baumaschine (1), insbesondere Straßenfräsmaschine, nach einem der Ansprüche 1 bis 9 zur Bearbeitung des Bodens oder Errichtung eines Bauwerks auf dem Boden in einem vorausgehenden Arbeitsprozess, dem ein anderer Arbeitsprozess mit einer anderen Baumaschine folgt, und einen Cloud-Speicher (18).

16. System nach Anspruch 15, **dadurch gekennzeichnet, dass** das System ferner eine Datenverarbeitungseinrichtung (19) mit einer Mobilfunk-Kommunikationseinrichtung (19A) zum Aufbau einer Mobilfunkverbindung umfasst, welche derart eingerichtet ist, dass der GNSS-Telemetrie-Datensatz bzw. der Mobilfunk-Telemetrie-Datensatz aus dem Cloud-Speicher (18) ausgelesen wird und die Daten des GNSS-Telemetrie-Datensatzes bzw. Mobilfunk-Telemetrie-Datensatzes derart verarbeitet werden, dass diese auf einem Bildschirm (19B) der Datenverarbeitungseinrichtung (19) visualisiert werden.
